# EUROPEAN PATENT SPECIFICATION

(11) **EP 1 997 653 B1**
(45) Date of publication and mention of the grant of the patent: **14.07.2010**
(21) Application number: 08009713.2
(22) Date of filing: 28.05.2008
(51) Int. Cl.: B60C 19/08

(54) **Pneumatic tire**
Luftreifen
Pneu

(30) Priority: 29.05.2007 JP 2007142216
(43) Date of publication of application: 03.12.2008
(73) Proprietor: Sumitomo Rubber Industries, Ltd., Kobe-shi Hyogo-ken (JP)
(72) Inventor: Mafune, Toshiyuki, Kobe-shi Hyogo 651-0072 (JP); Sakamoto, Masayuki, Kobe-shi Hyogo 651-0072 (JP); Nobuchika, Hideo, Kobe-shi Hyogo 651-0072 (JP)
(74) Representative: Manitz, Finsterwald & Partner GbR

(56) References cited:
- EP-A- 1 526 005
- EP-A- 1 533 144
- US-A1- 2006 102 264

## Description

### BACKGROUND OF THE INVENTION

The present invention relates to a pneumatic tire capable of preventing electrostatic accumulation, more particularly to a pneumatic tire having in a sidewall portion an electrically conducting path formed by a ribbon-like electrically conductive rubber strip extending linearly in a radial direction.

In tires currently put on the market, tire-constituting components occupying 50 % or more of the overall weight of a tire are made of petroleum-based materials derived from petroleum as a raw material. For example, general radial tires for passenger cars contain about 20 % by weight or more of a synthetic rubber, about 20 % by weight or more of a carbon black, and others, e.g., a petroleum-based oil such as aromatic oil and a synthetic fiber, based on the overall tire weight.

On the other hand, in recent years, CO₂ emission regulation is tightened from the viewpoint of environmental problems. Further, as petroleum resources are limited and its supply is decreasing year by year, large increase in oil price in future is predicted. Therefore, there is a limit to the use of raw materials derived from petroleum resources. Assuming that petroleum is exhausted in future, it is important to produce tires from nonpetroleum-based materials, in other words, raw materials derived from non-petroleum resources, e.g., metals, natural rubber, inorganic fillers and/or biofillers, natural fats and oils, natural resins, natural fibers, processed products of these materials, and the like. JP-A-2003-063206 proposes an ecological tire comprising raw materials derived from non-petroleum resources in an amount of at least 75 % by weight based on the total weight of the tire.

For utilizing non-petroleum resources in large quantities in tires, it is inevitable to replace a synthetic rubber and carbon black used as its reinforcing agent, which occupy a high proportion of the overall weight of tire, with natural rubber and silica which are nonpetroleum-based materials. However, since an inorganic reinforcing agent such as silica has a high electric insulation property, replacement of carbon black with silica or the like invites an increase in electric resistance of tires. Consequently, it causes a problem that static electricity is accumulated in a vehicle to cause radio disturbance such as radio noise and electrical malfunction.

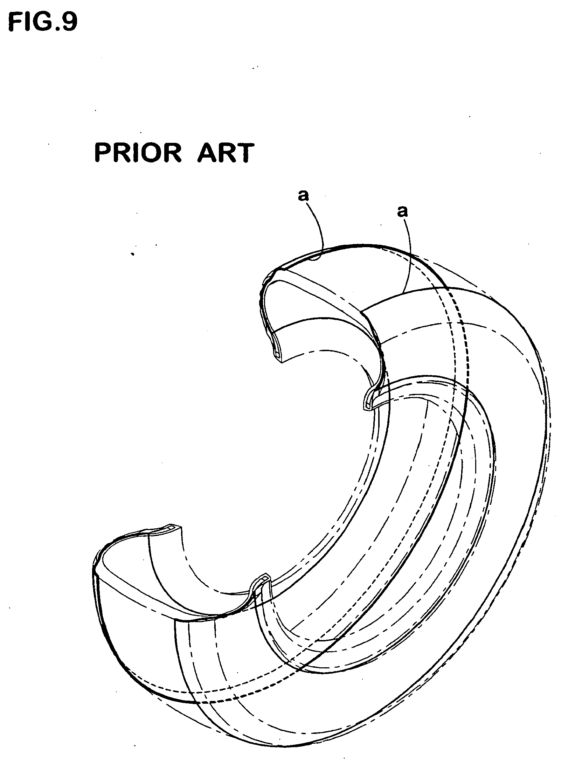

A means for preventing electrostatic accumulation is known, for example, from JP-A-2007-008269 (which is considered as the closest prior art document) wherein, as conceptually shown in Fig. 9, an electrically conducting rubber layer "a" is disposed between a carcass and a sidewall rubber to provide electric continuity between a tread ground contact surface and a rim. However, since this electrically conducting rubber layer "a" is formed over the whole circumference of a tire, its volume is relatively large. Since this layer requires the use of carbon black, the proposed tire does not sufficiently meet the need of utilization of non-petroleum resources in tires.

Accordingly, it is an object of the present invention to provide a pneumatic tire capable of preventing radio disturbance, electrical malfunction and so on which are caused by electrostatic accumulation, while suppressing the amount of carbon black as small as possible to achieve utilization of nonpetroleum-based materials in high proportions.

This and other objects of the present invention will become apparent from the description hereinafter.

### SUMMARY OF THE INVENTION

In accordance with the present invention, there is provided a pneumatic tire comprising at least 75 % by weight, based on the overall weight of the tire, of tire-constituting components made of nonpetroleum-based materials, said tire comprising a carcass extending from a tread portion to each of bead cores in a pair of bead portions through a pair of sidewall portions, and tire rubber members including a tread rubber disposed radially outward of said carcass to provide an outer surface of said tread portion, a pair of sidewall rubbers disposed axially outward of said carcass to provide an outer surface of said sidewall portions, and a pair of clinch rubbers forming an outer surface of said bead portions,
wherein said tread rubber comprises a cap rubber which provides a ground contact surface of said tread portion, a base rubber disposed radially inward of said cap rubber, and a pair of wing rubbers disposed axially outward of said cap rubber,
a boundary surface between said cap rubber and each of said wing rubbers has an exposing end which is exposed on the outer surface of said tread portion, and the axial distance L from said exposing end to the tire equator is not less than 0.4 times a tread ground contact width and less than 0.5 times the tread ground contact width, and
wherein each of said base rubber, said cap rubber, said sidewall rubbers and a topping rubber of said carcass is formed of an insulating rubber material having a volume resistivity of at least 1 x 10⁸ Ωcm, and said wing rubbers are formed of an electrically conductive rubber material having a volume resistivity of at most 1 × 10⁷ Ωcm, and
said sidewall portions are provided with at least one electrically conducting path formed from a ribbon-like conductive rubber strip which is made of an electrically conductive rubber material having a volume resistivity of at most 1 × 10⁷ Ωcm and has a width Ws of 10 to 40 mm, in which a radially outer end portion of said conductive rubber strip provides an electrically conducting part which is in contact with one of said wing rubbers, and said conductive rubber strip extends linearly in a radially inward direction from said electrically conducting part to reach one of said clinch rubbers.

The term "volume resistivity" as used herein denotes a value measured by an electric resistance meter ADVANTESTER 8340A available from Advantest Co. under conditions of applied voltage 500 V, temperature 25°C and humidity 50 % using a rubber specimen of 15 cm × 15 cm × 2 mm (thickness).

The term "ground contact surface" or "tread ground contact surface" as used herein denotes a region in the tread surface which can come into contact with the ground when a tire is mounted on a standard rim and inflated to a normal inner pressure and this tire in the normal inner pressure state is then loaded with a normal load. Further, the maximum axial width of this ground contact surface is herein called "ground contact width" or "tread ground contact width".

The term "rim contact region" as used herein denotes a region in the outer surface of the bead portion, which comes into contact with a rim in the normal inner pressure state.

The term "standard rim" denotes a rim defined for every tire in a standardizing system on which the tire is based and is, for example, "standard rim" in JATMA, "Design Rim" in TRA and "Measuring Rim" in ETRTO. The term "normal inner pressure" denotes an air pressure defined for every tire in the standardizing system and is, for example, the "maximum air pressure" in JATMA, the maximum value recited in the table of "Tire Load Limits at Various Cold Inflation Pressures" in TRA, and the "Inflation Pressure" in ETRTO", provided that in case of tires for passenger cars, the "normal inner pressure" is 180 kPa. The term "normal load" denotes a load defined for every tire in the standardizing system and is, for example, the maximum load capacity in JATMA, the maximum value recited in the table of "Tire Load Limits at Various Cold Inflation Pressures" in TRA, and the "Load Capacity" in ETRTO.

The pneumatic tires of the present invention having a structure as mentioned above can reduce the electric resistance while suppressing the amount of carbon black as small as possible, and can prevent radio disturbance, electrical malfunction and so on, which are caused by electrostatic accumulation, while achieving utilization of nonpetroleum-based materials in high proportions.

### BRIEF DESCRIPTION OF THE DRAWINGS

Fig. 1 is a cross sectional view of a pneumatic tire in the normal inner pressure state according to the present invention;
Fig. 2 is a perspective view of the tire showing the state of formation of an electrically conducting path;
Fig. 3 is a cross sectional view taken on line A-A in Fig. 1;
Fig. 4 is an enlarged cross sectional view of a bead portion including a clinch rubber made of an electrically conductive rubber material;
Fig. 5 is a cross sectional view showing another example of the electrically conducting path at a location corresponding to the line A-A in Fig. 1;
Fig. 6 is a cross sectional view of a pneumatic tire according to the present invention showing another example of the electrically conducting path;
Figs. 7(A) and 7(B) are enlarged cross sectional views of a bead portion;
Fig. 8 is a schematic cross sectional view conceptually showing a device for measuring the electric resistance of a tire; and
Fig. 9 is a perspective view of a tire for illustrating prior art.

### DETAILED DESCRIPTION OF THE INVENTION

An embodiment of the present invention will now be explained with reference to the accompanying drawings.

In a pneumatic tire according to the present invention, at least 75 % by weight of tire-constituting components or materials based on the overall weight of the tire are made of nonpetroleum-based materials, in other words, raw materials derived from nonpetroleum resources.

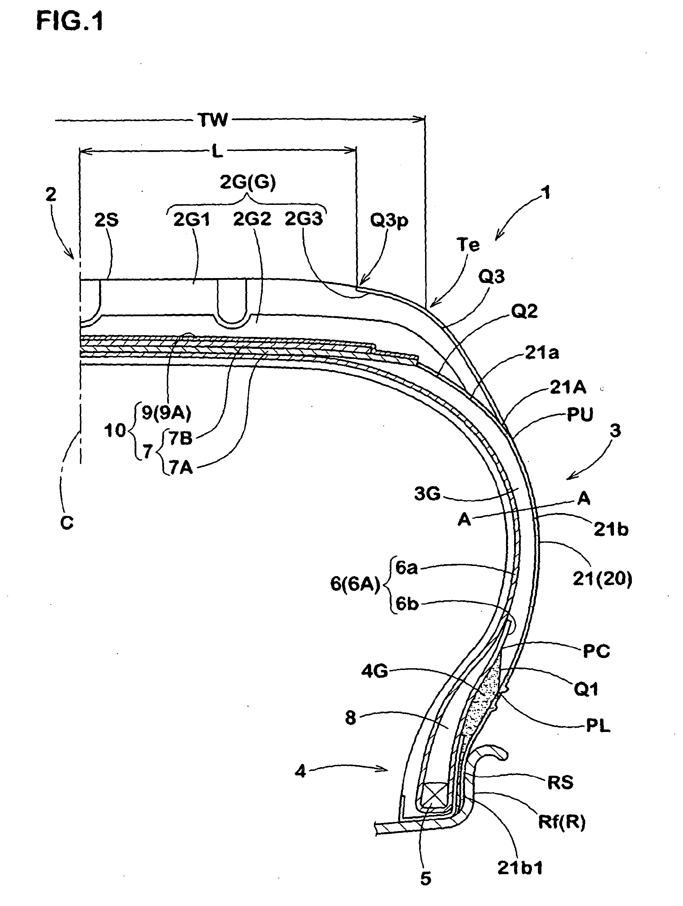

As shown in Fig. 1, a pneumatic tire 1 according to the present invention is provided at least with a carcass 6 extending from a tread portion 2 to each of bead cores 5 in opposing bead portions 4 through sidewall portions 3; and tire rubber members G including, at least, a tread rubber 2G disposed radially outward of the carcass 6 to provide an outer surface of the tread portion 2, a pair of sidewall rubbers 3G disposed axially outward of the carcass 6 to provide an outer surface of the sidewall portions 3, and a pair of clinch rubbers 4G forming an outer surface of the bead portions 4.

The carcass 6 comprises at least one carcass ply 6A (in this embodiment, one carcass ply) in which carcass cords are disposed at an angle of 70 to 90° with respect to the tire circumferential direction and are covered with a topping rubber. The carcass ply 6A is composed of a toroidal main portion 6a that extends from one bead core 5 to the opposing bead core 5, passing through a crown region of the tire, and turnup portions 6b that are continuous with the both ends of the main portion 6a and are turned up around the bead cores 5 from the axially inside toward the axially outside of the tire to thereby anchor the carcass ply.

For reinforcing the bead portions 4, between the carcass ply main portion 6a and each carcass ply turnup portion 6b is disposed a bead apex rubber 8 that extends radially outwardly from the bead core 5 in a tapered manner.

Each of the bead cores 5 comprises a ring body which is formed, for instance, by winding a bead wire 5w multiple times to have a predetermined cross sectional shape. It serves to sufficiently ensure engagement with a rim R and to enhance the steering stability and the bead durability.

A tread-reinforcing cord layer 10 is disposed radially outward of the carcass 6 in the tread portion 2. In this embodiment shown in Fig. 1, the tread-reinforcing cord layer 10 comprises a belt 7 superposed on the carcass 6 and a band 9 superposed on the belt 7.

The belt 7 comprises at least two plies of belt cords which are arranged at an angle of, for instance, 15 to 40° with respect to the tire circumferential direction and covered with a topping rubber. The belt 7 shown in this embodiment comprises two belt plies 7A and 7B. The belt plies are stacked so that the belt cords in one ply cross the cords in the other belt ply, whereby the rigidity of the belt is raised to reinforce the tread portion 2 over approximately full width thereof by a hoop effect.

The band 9 comprises at least one band ply 9A of a band cord which is spirally wound at an angle of at most 5° with respect to the tire circumferential direction and covered with a topping rubber. The band 9 binds the belt 7 to enhance the steering stability, high speed durability and the like. As the band ply 9A are adoptable a pair of right and left edge band plies which are disposed to cover only axially outer edge portions of the belt 7, a full band ply which covers approximately full width of the belt 7, and a combination of them. The band 9 shown in this embodiment comprises one full band ply.

The tread-reinforcing cord layer 10 may be composed of only the belt 7 or only the band 9.

Further, for the purpose of reinforcement, a reinforcing ply (now shown) of reinforcing cords covered with a topping rubber may be additionally disposed in the bead portion 4 and/or the sidewall portion 3, as occasion demands.

Among the tire rubber members G, the clinch rubber 4G is made of a high modulus rubber which is superior in wear resistance, as well known in the art. The clinch rubber extends radially outwardly from a bead heel to form the outer surface of the bead portion 4 including at least a region RS contacting a rim flange Rf (hereinafter referred to as rim-contacting region RS). The clinch rubber 4G serves to prevent damage of the bead portion owing to slippage of the rim.

The sidewall rubber 3G is made of a relatively low modulus rubber which is superior in bending resistance. It flexibly bends to follow tire deformation to thereby prevent generation of cracks in the outer surface of the sidewall portion 3. In this embodiment shown in the drawings, a radially inner edge portion of the sidewall rubber 3G is in contact with the clinch rubber 4G to form a boundary surface Q1 which extends from a radially inner end point PL on the outer surface of the sidewall portion 3 toward the carcass 6, particularly to a point PC on the outer surface of the carcass turnup portion 6b, approximately parallel to the tire equator plane or with slightly inclining axially inwardly. Further, in the tire 1 shown in this embodiment, a radially outer edge portion of the sidewall rubber 3G is formed into a so-called TOS (tread over sidewall) structure in which the radially outer edge portion of the sidewall rubber 3G is covered with an axially outer edge portion of the tread rubber 2G. Therefore, the sidewall rubber 3G and the tread rubber 2G are in contact with each other to form a boundary surface Q2 which extends from a radially outer end point PU on the outer surface of the sidewall portion 3 to an axially outer edge of the belt 7 with inclining radially outwardly.

The tread rubber 2G comprises a cap rubber 2G 1 which provides a ground contact surface 2S of the tread portion 2, a base rubber 2G2 disposed radially inward of the cap rubber 2G1, and a pair of wing rubbers 2G3 disposed axially outward of the cap rubber 2G1. An axially outer edge portion of the tread rubber 2G is bent radially inwardly so that it locates axially outward of an axially outer edge of the tread-reinforcing cord layer 10 and an axially outer edge portion of the base rubber 2G2 is located axially inward of an axially outer edge portion of the cap rubber 2G1. The tread rubber 2G can be produced using a known three layer co-extruder by which cap rubber 2G1, base rubber 2G2 and wing rubber 2G3 are co-extruded to form an integrated single body. A boundary surface Q3 between the cap rubber 2G1 and the wing rubber 2G3 has an exposing end Q3p which exposes at the outer surface of the tread portion 2. The axial distance L from the exposing end Q3p to the tire equator C is not less than 0.4 times the tread ground contact width TW and less than 0.5 times the tread ground contact width TW. That is to say, the wing rubber 2G3 extends axially inwardly beyond a tread ground contact edge Te so that an axially inner edge portion of the wing rubber is located in a ground contact region. A part of the wing rubber 2G3 can contact the ground when running. If the distance L is less than 0.4 times the ground contact width TW (L/TW < 0.4), uneven wear occurs between the cap rubber 2G1 and the wing rubber 2G3 to deteriorate the appearance. If the distance L is not less than 0.5 times the ground contact width TW, the wing rubber 2G3 does not surely contact the ground. Therefore, preferably the distance L is at least 0.42 times the ground contact width TW and at most 0.46 times the ground contact width TW.

In this embodiment, the wing rubber 2G3 is in the form of a sheet having a thickness of 0.5 to 2.0 mm. Therefore, its rubber volume is kept low, but the wing rubber 2G3 can surely contact the ground even in the case that the tread rubber 2G is worn away, since the radially outer edge portion of the wing rubber is located axially inward of the tread ground contact edge Te.

Herein, carcass cords, bead wire, belt cords, band cords, reinforcing cords and so on may be generically called "tire cords".

The tire rubber members G include, for instance, besides the above-mentioned tread rubber 2G, sidewall rubber 3G and clinch rubber 4G, an inner liner rubber (not shown) which forms a tire cavity surface, the bead apex rubber 8, and topping rubbers used for respective plies.

In the present invention, at least 75 % by weight, preferably at least 85 % by weight, more preferably at least 95 % by weight, of all tire-constituting components including the tire cords and the tire rubber members based on the overall weight of the tire are formed from nonpetroleum-based materials. The term "nonpetroleum-based materials" as used herein means materials derived from raw materials other than petroleum and encompasses, for instance, metals, natural rubber, inorganic fillers and/or biofillers, natural fats and oils, natural resins, natural waxes, natural fibers, processed products of these materials, and the like.

Specifically, in this embodiment shown in the drawings, cords made of nonpetroleum-based materials are used for a part or all of the tire cords. For carcass cords, band cords, reinforcing cords and so on of the tire cords have been conventionally used synthetic fiber cords made of raw materials derived from petroleum resources, e.g., nylon polyester and aromatic polyamide. In the present invention, a part or all of such synthetic fiber cords are replaced with cords made of nonpetroleum-based materials. As the cords made of nonpetroleum-based materials can be used metal cords made of metals and natural fiber cords made of natural fibers or processed products thereof. Natural fiber cords are preferred from the viewpoint of suppressing increase of fuel consumption owing to weight increase.

As the natural fiber cords can be suitably used cords of regenerated cellulose fibers such as rayon, cuprammonium rayon (cupro) and acetate fibers, and cords of refined cellulose fibers such as lyocell (available under the trade mark "Tencel" from Lenzing AG). These regenerated cellulose fibers and refined cellulose fibers have a high breaking strength comparable to nylon fibers and polyester fibers and, therefore, are suitable for use as a tire cord. In particular, the refined cellulose fibers have a feature of having a high modulus, since the degree of crystallization thereof is high as compared with the regenerated cellulose fibers and the orientation of crystal portion and non-crystal portion is high. Furthermore, because of having a high degree of crystallization and a high orientation of crystal and non-crystal portions, the refined cellulose fibers have the feature that moisture is hard to enter between cellulose molecular chains and therefore the stability of strength and elongation to moisture is high, whereas rayon tends to cause deterioration of strength owing to moisture. Therefore, the stability of strength and elongation to moisture can be enhanced by using the refined cellulose fiber cords as a carcass cord and/or a band cord. Thus, such a use of refined cellulose fiber cords is not mere replacement with petroleum-based fiber cords, but produces an effect of improving the high speed durability and the high speed steering stability as compared with conventional tires using nylon cords, polyester cords and so on. In case of heavy duty tires, it is preferable to use metal cords, e.g., steel cords, as carcass cords or reinforcing cords in the same manner as conventional heavy duty tires.

Metal cords and metal wires have been conventionally used as belt cords or bead wires. In the present invention, too, the metal cords or wires are applied to the belt cords and bead wires in the same manner as conventional tires. From the viewpoint of preventing the fuel cost from increasing owing to increase in weight, it is preferable to use metal cords and wires in an amount of at most 20 % by weight based on the overall weight of the tire.

The tire rubber members G are produced from various rubber compositions containing a rubber component and additives known for use in tires. In the present invention, a part or all of the rubber component and a part or all of the additives are constituted by nonpetroleum-based materials. It is known to use, as the rubber component, a blend of a nonpetroleum-based material, natural rubber, with a synthetic rubber prepared from a raw material derived from a petroleum resource, such as styrene-butadiene rubber (SBR), butadiene rubber (BR) or butyl rubber (IIR). For example, from the viewpoints of tear resistance and low rolling resistance, it is known to use a blend of natural rubber and styrene-butadiene rubber in the tread rubber 2G, the bead apex rubber 8 and the topping rubbers for respective plies. Also, from the viewpoints of tear resistance and flex cracking resistance, it is known to use a blend of natural rubber and butadiene rubber in the sidewall rubber 3G and the clinch rubber 4G. Further, from the viewpoints of adhesion property and air impermeability, it is known to use a blend of natural rubber and butyl rubber in the inner liner rubber. In the present invention, in such rubber blends, a part or all of the synthetic rubber is replaced with a rubber made of a nonpetroleum-based material.

Natural rubber (including modified natural rubbers) is used as a rubber made of a nonpetroleum-based material. A typical example of the modified natural rubber is an epoxidized natural rubber. The epoxidized natural rubber tends to have superior performances such as grip performance, low rolling resistance and flex cracking resistance. Accordingly, a blend of natural rubber and epoxidized natural rubber can be suitably used in various tire rubber members which require different properties from each other, by suitably changing the blending ratio.

Examples of the additives to be incorporated into the tire rubber members G are, for instance, a reinforcing agent, a softener, a vulcanizing agent, a vulcanization accelerator, an antioxidant, a tackifier, and the like. Of these additives, reinforcing agent, softener and vulcanizing agent are added to a rubber component as essential components, and other additives are used as occasion demands.

As a reinforcing agent has been conventionally used a carbon black prepared using a petroleum resource as a raw material, from the viewpoint of reinforcing effect. In conventional tires, the amount of carbon black is about 20 % by weight or more based on the overall weight of a tire. In the present invention, a part or all of the carbon black is replaced with a nonpetroleum-based reinforcing agent, i.e., an inorganic filler and/or a biofiller. Examples of the inorganic filler are, for instance, silica, sericite, calcium carbonate, clay, alumina, talc, magnesium carbonate, aluminum hydroxide, magnesium hydroxide, magnesium oxide, titanium oxide, and the like. Examples of the biofiller are, for instance, plant-derived polysaccharides such as starch and cellulose, and animal-derived polysaccharides such as chitin and chitosan. Of these, silica is preferred from the viewpoint of ensuring the effect of reinforcing a rubber.

As a softener have been conventionally used petroleum-based oils such as paraffinic oils, aromatic oils and naphthenic oils which are derived from petroleum resources. In conventional tires, the petroleum-based oils are generally used in an amount of about 8 % by weight based on the overall weight of a tire. In the present invention, a part or all of the petroleum-based oils are replaced by a nonpetroleum-based softener, i.e., natural oils and fats. Vegetable oils and fats can be used as the natural oils and fats. Examples of the vegetable oils and fats are, for instance, castor oil, cotton seed oil, linseed oil, rape seed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, safflower oil and tung oil. Of these, vegetable oils and fats having a low degree of unsaturation are preferred, e.g., semi-drying oils having an iodine number of 100 to 130, non-drying oils having an iodine number of at most 100, and solid fats. The "iodine number" denotes the number of grams of iodine absorbed by 100 g of sample. If the iodine number of vegetable oils and fats is more than 130, there is a tendency that the loss factor (tan δ) increases and the hardness decreases, thus causing increase of rolling resistance and decrease of steering stability.

Other additives such as vulcanizing agent, vulcanization accelerator, antioxidant and tackifier have a great influence on rubber properties, although the amounts thereof are very small as compared with the reinforcing agent and the softener. Therefore, as these additives, conventionally used ones are preferably used in the present invention.

In the tires according to this embodiment shown in the drawings, at least the cap rubber 2G1, the base rubber 2G2, the sidewall rubber 3G and the topping rubber of carcass 6 are formed of insulating rubber materials which contains an organic filler such as silica as a reinforcing agent to have a volume resistivity of at least 1 × 10⁸ Ωcm. The reason is that these rubbers occupy a large volume in a tire and have a large degree of contribution to ecology. Preferably, rubber members other than the wing rubber 2G3 and a ribbon-like electrically conductive rubber strip 21 (shown in Fig. 1) for forming an electrically conducting path 20 described after are prepared from the insulating rubber materials.

In contrast, the wing rubber 2G3 and the electrically conductive rubber strip 21 are formed of electrically conductive rubber materials having a volume resistivity of at most 1 × 10⁷ Ωcm for the purpose of decreasing the electric resistance. In the conductive rubber materials, the volume resistivity is decreased usually by using a large amount of carbon black as a reinforcing agent, but it may be used in combination with an ionic conductive material such as a lithium salt or a metal material such as nickel in order to decrease the volume resistivity within the above-mentioned range.

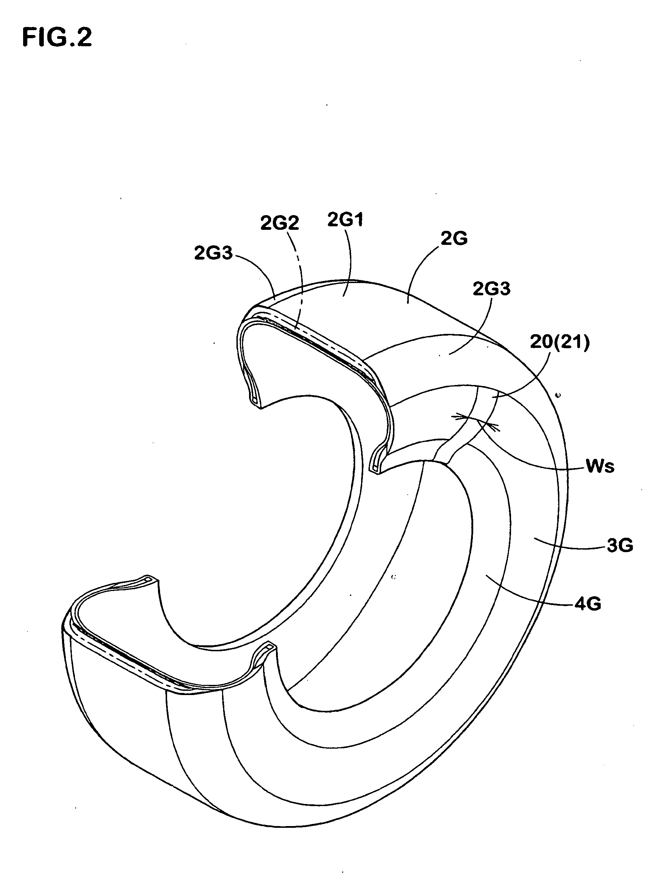

In the tires according to the present embodiment, at least one electrically conducting path 20 (in the present embodiment, one conducting path 20) made of an electrically conductive rubber strip 21 is formed in the sidewall portion 3, as shown in Figs. 1 and 2, in order to achieve electric conduction between the wing rubber 2G3 and the rim R.

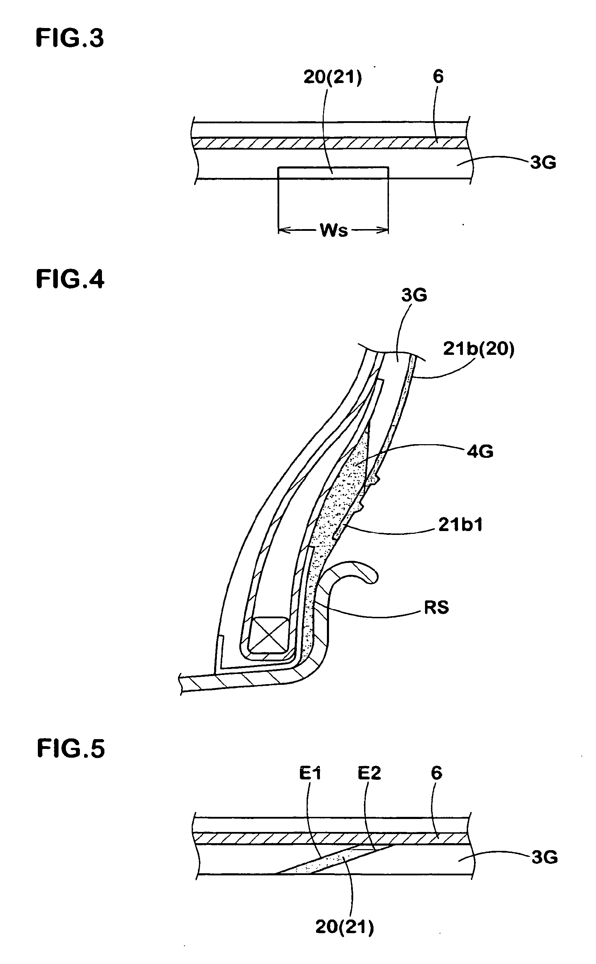

The electrically conductive rubber strip 21 is a ribbon-like material having a width Ws (shown in Figs. 2 and 3) of 10 to 40 mm. A radially outer end portion of the strip 21 (conducting path 20) has a conducting part 21A which is in contact with the wing rubber 2G3. The conductive rubber strip 21 (conducting path 20) extends straight from the wing rubber-contacting part 21A in a radially inward direction through an axial outside of the carcass 6.

In the embodiment shown in the drawings, the radially outer end portion of the conductive rubber strip 21 is disposed at the boundary surface Q2 between the sidewall rubber 3G and the tread rubber 2G to form a nip-holding portion 21a which is sandwiched between the sidewall rubber 3G and the tread rubber 2G and held thereby. The conducting part 21A which is in contact with the wing rubber 2G3 is located at a part of the nip-holding portion 21a. The conductive rubber strip 21 (conducting path 20) has a main portion 21b which is continuous with the nip-holding portion 21a and extends radially inwardly while contacting the outer surfaces of the sidewall rubber 3G and the clinch rubber 4G. A lower end portion 21b1 of the main portion 21 b can terminate to expose at the rim-contacting region RS of the clinch rubber 4G. In this case, an insulating rubber material can be used for the clinch rubber 4G.

Since the conductive rubber strip 21 (conducting path 20) electrically connects the wing rubber 2G3 and the rim R at a minimal distance, it exhibits an excellent conducting performance and accordingly can sufficiently lower the electric resistance of a tire in spite of a single narrow-width ribbon-like material having a width Ws of 10 mm or less. The outer end portion (nip-holding portion 21a) of the rubber strip 21 (conducting path 20) is sandwiched between the tread rubber 2G and the sidewall rubber 3G so as to contact the wing rubber 2G3 at the conducting part 21A. Therefore, stable electric conduction with the wing rubber 2G3 is secured. Further, since the radially inner end portion of the rubber strip 21 which is located at the rim-contacting region RS is always in contact with the rim R with pressure, stable electric conduction with the rim R is also secured although the strip 21 is a single narrow-width ribbon-like material.

If the width Ws of the rubber strip 21 is less than 10 mm, the conducting performance tends to be insufficient for sufficiently lower the electric resistance. If the width Ws is more than 40 mm, the volume of the rubber strip 21 and the amount of carbon black incorporated therein unnecessarily increase. From the same viewpoints, it is preferable that the thickness of the electrically conductive rubber strip 21 is from 0.5 to 2.0 mm.

Since the conductive rubber strip 21 (conductive path 20) has a narrow width, it does not exert a bad influence on the tire performances including uniformity. Therefore, unbalanced arrangement of the conducting path 20 is possible. For example, the conducting path 20 may be formed in only one of a pair of sidewall portions 3 and/or only single conducting path 20 may be formed.

As shown in Fig. 3, the conductive rubber strip 21 is preferably embedded in the sidewall rubber 3G so that the surface of the rubber strip 21 forms a single flat surface with the surface of the sidewall rubber 3G and the surface of the clinch rubber 4G.

The clinch rubber 4G may be formed of an electrically conductive rubber material, although it is undesirable from the viewpoint of increasing the proportion of nonpetroleum-based materials in tires. In this case, as shown in Fig. 4, the radially inner end of the conducting path 20 may terminate at a location radially outward of the rim-contacting region RS so long as the radially inner end portion 21 b 1 of the main portion 21b is in contact with the clinch rubber 4G. In this case, too, the conducting path 20 is electrically connected to the rim R through the conductive clinch rubber 4G.

In a green tire forming process, the sidewall rubber 3G is formed, for example, by winding a raw rubber sheet for sidewall rubber around a tire forming drum in the circumferential direction of tire. Therefore, as shown in Fig. 5, the conducting path 20 can also be formed by interposing the conductive rubber strip 21 between a wind starting end portion E1 of the raw rubber sheet for sidewall rubber and a wind finishing end portion E2 of the raw rubber sheet. One edge of the rubber strip 21 comes into contact with the carcass 6, and the other edge exposes at the outer surface of the sidewall portion 3. In this case, the exposing area of the conducting path 20 can be decreased.

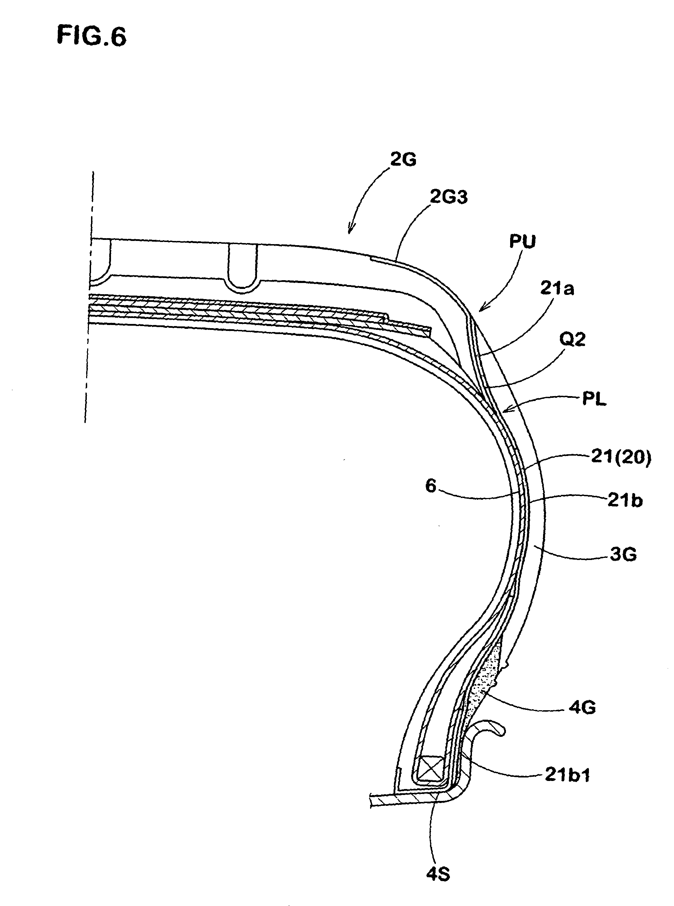

In Fig. 6 is shown another example wherein a conducting path 20 is formed in a pneumatic tire 1 having a so-called SOT (sidewall over tread) structure. In this SOT structure, an axially edge portion of the tread rubber 2G is covered with a radially outer edge portion of the sidewall rubber 3G, and the tread rubber 2G and the sidewall rubber 3G are in contact with each other to form a boundary surface Q2 which extends from a radially outer end point PU on the outer surface of the sidewall portion 3 to a radially inner end point PL on the carcass 6.

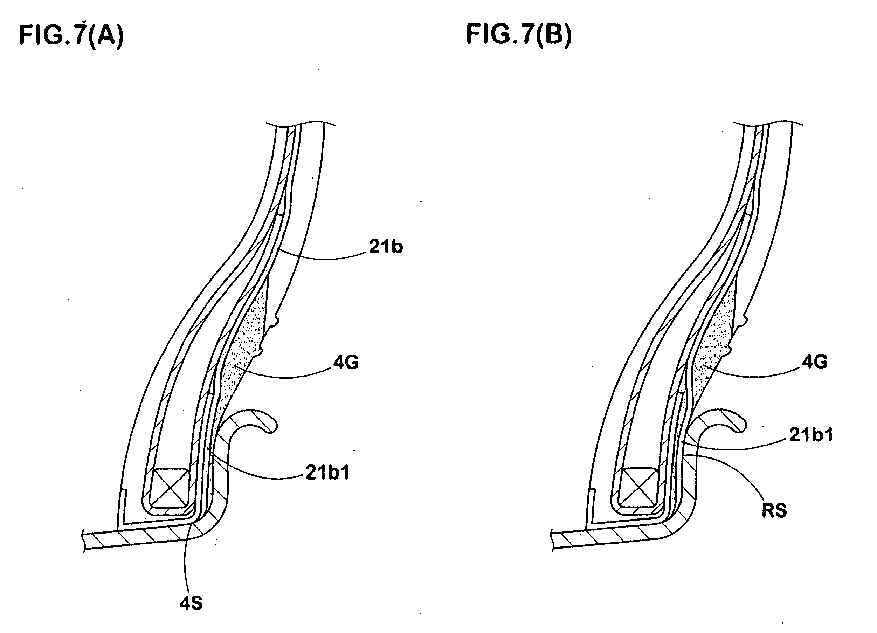

The conductive rubber strip 21 (conducting path 20) is composed of a nip-holding portion 21 a which is located at the boundary surface Q2 and sandwiched between the sidewall rubber 3G and the tread rubber 2G (wing rubber 2G3), and a main portion 21b which is continuous with the nip-holding portion 21a and extends radially inwardly through a location between the carcass 6 and the sidewall rubber 3G and a location between the carcass 6 and the clinch rubber 4G. In this example, a lower end portion 21b1 of the main portion 21 b is exposed at a bead bottom 4S to achieve electric conduction with the rim R, as shown in Fig. 7(A). On the other hand, as shown in Fig. 7(B), the lower end portion 21b1 may be passed through the clinch rubber 4G and be exposed at the rim-contacting region RS.

While a preferable embodiment of the present invention has been described with reference to the drawings, it goes without saying that the present invention is not limited to only such an embodiment and various changes and modifications may be made. The present invention is more specifically described and explained by means of the following examples and comparative examples. It is to be understood that the present invention is not limited to these examples.

### EXAMPLES 1 TO 5 AND COMPARATIVE EXAMPLES 1 TO 5

Pneumatic tires (size: 215/ 45ZR 17) having a base structure shown in Fig. 1 were manufactured based on the specifications shown in Table 1, and the electric resistance thereof was measured by the method described below. Specifications of tires which are not described in the table are common to all tires.

In both the Examples and the Comparative Examples, rubber members other than a wing rubber and a conductive rubber strip for electric conduction were formed of an insulating rubber member containing 30 parts by weight of silica per 100 parts by weight of a rubber component (natural rubber) and having a volume resistivity of 1 × 10⁸ Ωcm or more. The wing rubber and the conductive rubber strip were formed of an electrically conductive rubber member containing 30 parts by weight of carbon black per 100 parts by weight of a rubber component (natural rubber) and having a volume resistivity of 8.0 × 10⁵ Ωcm.

The results are shown in Table 1.

### <Electric Resistance of Tires>

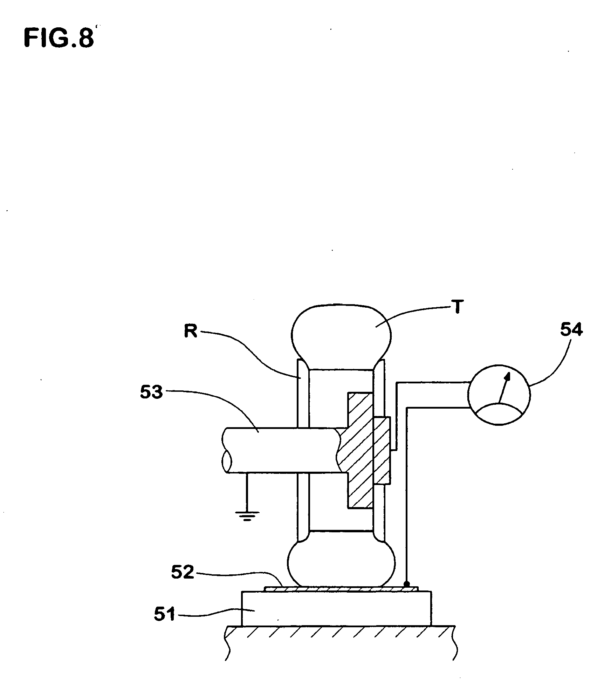

The electric resistance of a tire-rim assembly was measured according to a JATMA standard by using a measuring apparatus having, as shown in Fig. 8, a grounded insulating plate 51, a conductive metal plate 52 mounted on the insulating plate 51, a tire mounting shaft 53 for holding an assembly of a tire T and a rim R, and an electric resistance meter 54. The measuring range of the electric resistance meter 54 is from 1.0 × 10³ to 1.6 × 10¹⁶. The surface of the metal plate 52 was smoothly polished and its electric resistance was set to 10 Ω or less. The electric resistance of the insulating plate 51 was set to 10¹² Ω or more. The measurement was made at a temperature of 25°C and a humidity of 50 % according to the following procedures.
(1) A tire T was sufficiently washed to remove a releasing agent and a grime on the surface and sufficiently dried, and a conductive rim (16x7J) made of an aluminum alloy was attached to the tire T by using an aqueous solution of soap.
(2) The tire T was allowed to stand for 2 hours in a testing room kept at a temperature of 25°C and a humidity of 50 %, and then attached to the tire mounting shaft 53.
(3) The tire T was inflated to an inner pressure of 200 kPa. To the tire, a load of 5.3 kN (80% of the maximum load capacity) was applied firstly for 0.5 minute, released and then applied for 0.5 minute, released again and finally applied for 2 minutes.
(4) A voltage of 1,000 V was applied. After 5 minutes, the electric resistance between the tire mounting shaft 53 and the metal plate 52 was measured by the electric resistance meter 54. The measurement was made at four positions spaced at 90 degrees in the tire circumferential direction, and the maximum value was adopted as the electric resistance (measured value) of the tire T.

**Table 1**

| | Com. Ex. 1 | Com. Ex.2 | Ex. 1 | Ex. 2 | Ex. 3 | Ex. 4 | Ex. 5 Com. | Ex.3 | Com. Ex.4 | Com. Ex. 5 |
|---|---|---|---|---|---|---|---|---|---|---|
| Wing rubber | cond.* | cond. | cond. | cond. | cond. | cond. | cond. | cond. | cond. | cond. |
| L/TW ratio | 0.6 | 0.3 | 0.4 | 0.4 | 0.4 | 0.4 | 0.4 | 0.5 | 0.4 | 0.4 |
| Conducting path | none | | | | | | | | | |
| Number of paths | - | 1 | 1 | 1 | 1 | 1 | 1 | 1 | 1 | 1 |
| Width Ws (mm) | - | 23 | 10 | 40 | 23 | 23 | 10 | 23 | 5 | 23 |
| Thickness (mm) | - | 1.0 | 1.0 | 1.0 | 0.5 | 2.0 | 0.5 | 1.0 | 1.0 | 0.2 |
| Electric resistance of tire (Ω) | 2×10⁹ | 6×10⁶ | 7×10⁶ | 6.5×10⁶ | 8×10⁶ | 6×10⁶ | 9×10⁶ | 1.5×10⁹ | 1×10⁹ | 2×10⁹ |

| | | | | | | | | | | |
|---|---|---|---|---|---|---|---|---|---|---|
| * Conductive wing rubber | | | | | | | | | | |

## Claims

1. A pneumatic tire (1) comprising at least 75 % by weight, based on the overall weight of the tire, of tire-constituting components made of nonpetroleum-based materials, said tire comprising a carcass (6) extending from a tread portion (2) to each of bead cores (5) in a pair of bead portions (4) through a pair of sidewall portions (3), and tire rubber members (G) including a tread rubber (2G) disposed radially outward of said carcass to provide an outer surface of said tread portion, a pair of sidewall rubbers (3G) disposed axially outward of said carcass to provide an outer surface of said sidewall portions, and a pair of clinch rubbers (4G) forming an outer surface of said bead portions (4),
wherein said tread rubber comprises a cap rubber (2G1) which provides a ground contact surface (2S) of said tread portion (2) a base rubber (2G2) disposed radially inward of said cap rubber, and a pair of wing rubbers (2G3) disposed axially outward of said cap rubber,
a boundary surface (Q3) between said cap rubber (2G1) and each of said wing rubbers (2G3) has an exposing end (Q3P) which is exposed on the outer surface of said tread portion, and the axial distance L from said exposing end to the tire equator (C) is not less than 0.4 times a tread ground contact width (TW) and less than 0.5 times the tread ground contact width, and
wherein each of said base rubber, said cap rubber, said sidewall rubbers and a topping rubber of said carcass is formed of an insulating rubber material having a volume resistivity of at least 1 × 10⁸ Ωcm, and said wing rubbers (2G3) are formed of an electrically conductive rubber material having a volume resistivity of at most 1 × 10⁷ Ωcm, and
said sidewall portions (3) are provided with at least one electrically conducting path (20) formed from a ribbon-like conductive rubber strip (21) which is made of an electrically conductive rubber material having a volume resistivity of at most 1 × 10⁷ Ωcm and which has a width Ws of 10 to 40 mm, in which a radially outer end portion of said conductive rubber strip provides an electrically conducting part which is in contact with one of said wing rubbers (2G3) and said conductive rubber strip extends linearly in a radially inward direction from said electrically conducting part to reach one of said clinch rubbers (4G).

2. The pneumatic tire of claim 1, wherein said conductive rubber strip has a thickness of 0.5 to 2.0 mm.

3. The pneumatic tire of claim 1 or 2, wherein said conductive rubber strip is disposed to be exposed on the outer surface of the sidewall portion.

4. The pneumatic tire of claim 1 or 2, wherein said conductive rubber strip is disposed to pass between the carcass and the sidewall rubber.

5. The pneumatic tire of any one of claims 1 to 4, wherein said clinch rubbers are formed of an electrically conductive rubber material, and a radially inner end portion of said conductive rubber strip terminates with contacting the clinch rubber.

6. The pneumatic tire of any one of claims 1 to 4, wherein said clinch rubbers are formed of an electrically insulating rubber material, and a radially inner end portion of said conductive rubber strip terminates so as to be exposed at a rim-contacting region where the outer surface of the bead portion comes into contact with a rim.

7. The pneumatic tire of any one of claims 1 to 4, wherein said clinch rubbers are formed of an electrically insulating rubber material, and a radially inner end portion of said conductive rubber strip terminates so as to be exposed at the bottom of the bead portion.

8. The pneumatic tire of claim 6 or 7, wherein tire rubber members other than said wing rubbers and said conductive rubber strip are formed of an insulating rubber material.

9. The pneumatic tire of any one of claims 1 to 8, wherein the radially outer end portion of said conductive rubber strip is sandwiched between said tread rubber and said sidewall rubber.

10. The pneumatic tire of any one of claims 1 to 9, wherein said conductive rubber strip is disposed so that one edge thereof is in contact with said carcass and the other edge is exposed on the outer surface of said sidewall portion.

## Patentansprüche

1. Luftreifen (1), der zumindest 75 Gew.-%, bezogen auf das Gesamtgewicht des Reifens, reifenbildende Bestandteile umfasst, die aus nicht auf Mineralöl basierenden Materialien hergestellt sind, wobei der Reifen eine Karkasse (6), die sich von einem Laufflächenabschnitt (2) zu einem jeden von Wulstkernen (5) in einem Paar Wulstabschnitten (4) durch ein Paar Seitenwandabschnitte (3) erstreckt, und Reifenkautschukelemente (G) umfasst, die einen Laufflächenkautschuk (2G), der radial außen von der Karkasse angeordnet ist, um eine Außenfläche des Laufflächenabschnitts vorzusehen, ein Paar Seitenwandkautschuke (3G), die axial außen von der Karkasse angeordnet sind, um eine Außenfläche der Seitenwandabschnitte vorzusehen, und ein Paar Abriebstreifenkautschuke (4G) umfassen, die eine Außenfläche der Wulstabschnitte (4) bilden,
wobei der Laufflächenkautschuk einen Deckkautschuk (2G1), der eine Bodenkontaktfläche (2S) des Laufflächenabschnitts (2) bereitstellt, einen Basiskautschuk (2G2), der radial innen von dem Deckkautschuk angeordnet ist, und ein Paar Flügelkautschuke (2G3) umfasst, die axial außen von dem Deckkautschuk angeordnet sind,
eine Grenzfläche (Q3) zwischen dem Deckkautschuk (2G1) und jedem der Flügelkautschuke (2G3) ein freigelegtes Ende (Q3P) aufweist, das an der Außenfläche des Laufflächenabschnitts freigelegt ist, und der axiale Abstand L von dem freigelegten Ende zu dem Reifenäquator (C) nicht kleiner als das 0,4-fache einer Laufflächenbodenkontaktbreite (TW) und kleiner als das 0,5-fache der Laufflächenbodenkontaktbreite ist, und
wobei ein jeder von dem Basiskautschuk, dem Deckkautschuk, den Seitenwandkautschuken und einem Gummierungskautschuk der Karkasse aus einem isolierenden Kautschukmaterial gebildet ist, das einen spezifischen Volumenwiderstand von zumindest 1 x 10⁸ Ωcm aufweist, und die Flügelkautschuke (2G3) aus einem elektrisch leitfähigen Kautschukmaterial gebildet sind, das einen spezifischen Volumenwiderstand von höchstens 1 x 10⁷ Ωcm aufweist, und
die Seitenwandabschnitte (3) mit zumindest einer elektrisch leitenden Strecke (20) versehen sind, die aus einem bandartigen, leitfähigen Kautschukstreifen (21) gebildet ist, der aus einem elektrisch leitfähigen Kautschukmaterial hergestellt ist, das einen spezifischen Volumenwiderstand von höchstens 1 x 10⁷ Ωcm aufweist, und der eine Breite Ws von 10 bis 40 mm aufweist, in welchem ein radial äußerer Endabschnitt des leitfähigen Kautschukstreifens einen elektrisch leitenden Teil bereitstellt, der mit einem der Flügelkautschuke (2G3) in Kontakt steht, und der leitfähige Kautschukstreifen sich geradlinig in einer Richtung radial nach innen von dem elektrisch leitenden Teil erstreckt, so dass er einen der Abriebstreifenkautschuke (4G) erreicht.

2. Luftreifen nach Anspruch 1,
wobei der leitfähige Kautschukstreifen eine Dicke von 0,5 bis 2,0 mm aufweist.

3. Luftreifen nach Anspruch 1 oder 2,
wobei der leitfähige Kautschukstreifen derart angeordnet ist, dass er an der Außenfläche des Seitenwandabschnitts freigelegt ist.

4. Luftreifen nach Anspruch 1 oder 2,
wobei der leitfähige Kautschukstreifen derart angeordnet ist, dass er zwischen der Karkasse und dem Seitenwandkautschuk verläuft.

5. Luftreifen nach einem der Ansprüche 1 bis 4,
wobei die Abriebstreifenkautschuke aus einem elektrisch leitfähigen Kautschukmaterial gebildet sind, und ein radial innerer Endabschnitt des leitfähigen Kautschukstreifens unter Kontaktierung des Abriebstreifenkautschuks endet.

6. Luftreifen nach einem der Ansprüche 1 bis 4,
wobei die Abriebstreifenkautschuke aus einem elektrisch isolierenden Kautschukmaterial gebildet sind, und ein radial innerer Endabschnitt des leitfähigen Kautschukstreifens derart endet, dass er an einem Felgenkontaktbereich freigelegt ist, an welchem die Außenfläche des Wulstabschnitts mit einer Felge in Kontakt gelangt.

7. Luftreifen nach einem der Ansprüche 1 bis 4,
wobei die Abriebstreifenkautschuke aus einem elektrisch isolierenden Kautschukmaterial gebildet sind, und ein radial innerer Endabschnitt des leitfähigen Kautschukstreifens derart endet, dass er an der Unterseite des Wulstabschnitts freigelegt ist.

8. Luftreifen nach Anspruch 6 oder 7,
wobei andere Reifenkautschukelemente als die Flügelkautschuke und der leitfähige Kautschukstreifen aus einem isolierenden Kautschukmaterial gebildet sind.

9. Luftreifen nach einem der Ansprüche 1 bis 8,
wobei der radial äußere Endabschnitt des leitfähigen Kautschukstreifens zwischen dem Laufstreifenkautschuk und dem Seitenwandkautschuk geschichtet angeordnet ist.

10. Luftreifen nach einem der Ansprüche 1 bis 9,
wobei der leitfähige Kautschukstreifen derart angeordnet ist, dass eine Kante davon in Kontakt mit der Karkasse steht und die andere Kante an der Außenfläche des Seitenwandabschnitts freigelegt ist.

## Revendications

1. Bandage pneumatique (1) comprenant au moins 75 % en poids, en se basant sur le poids total du pneumatique, de composants constitutifs de pneumatique réalisés en matériaux qui ne sont pas basés sur le pétrole, ledit pneumatique comprenant une carcasse (6) s'étendant depuis une portion formant bande de roulement (2) jusqu'à chacune des âmes de talon (5) dans une paire de portions formant talons (4) à travers une paire de portions formant parois latérales (3), et des éléments de pneumatiques en caoutchouc (G) incluant un caoutchouc de bande de roulement (2G) disposé radialement à l'extérieur de ladite carcasse pour constituer une surface extérieure de ladite portion formant bande de roulement, une paire de caoutchoucs de parois latérales (3G) disposés axialement à l'extérieur de ladite carcasse pour constituer une surface extérieure desdites portions formant parois latérales, et une paire de caoutchoucs rabattus (4G) formant une surface extérieure desdites portions formant talons (4),
dans lequel ledit caoutchouc de bande de roulement comprend un caoutchouc de couverture (2G1) qui constitue une surface de contact au sol (2S) de ladite portion formant bande de roulement (2), un caoutchouc de base (2G2) disposé radialement à l'intérieur dudit caoutchouc de couverture, et une paire de caoutchouc latéraux (2G3) disposés axialement à l'extérieur dudit caoutchouc de couverture,
une surface frontière (Q3) entre ledit caoutchouc de couverture (2G1) et chacun desdits caoutchoucs latéraux (2G3) possède une extrémité exposée (Q3P) qui est exposée sur la surface extérieure de ladite portion formant bande de roulement, et la distance axiale L depuis ladite extrémité exposée jusqu'à l'équateur (C) du pneumatique n'est pas inférieure à 0,4 fois une largeur de contact au sol (TW) de la bande de roulement et inférieure à 0,5 fois la largeur de contact au sol de la bande de roulement, et
dans lequel chacun des caoutchoucs que sont ledit caoutchouc de base, ledit caoutchouc de couverture, lesdits caoutchoucs de parois latérales, et un caoutchouc d'enrobage de ladite carcasse est formé d'un matériau en caoutchouc isolant ayant une résistivité volumétrique d'au moins 1 x 10⁸ Ωcm, et lesdits caoutchoucs latéraux (2G3) sont formés d'un matériau en caoutchouc électriquement conducteur ayant une résistivité volumétrique au maximum de 1 x 10⁷ Ωcm, et
lesdites portions formant parois latérales (3) sont pourvues d'au moins un trajet électriquement conducteur (20) formé d'une bande de caoutchouc conducteur (21) semblable à un ruban qui est réalisée en un matériau en caoutchouc électriquement conducteur ayant une résistivité volumétrique au maximum de 1 x 10⁷ Ωcm et possède une largeur Ws de 10 à 40 mm, dans lequel une portion d'extrémité radialement extérieure de ladite bande en caoutchouc conducteur constitue une partie électriquement conductrice qui est en contact avec l'un desdits caoutchoucs latéraux (2G3), et ladite bande en caoutchouc conducteur s'étend linéairement dans une direction radialement vers l'intérieur depuis ladite partie électriquement conductrice pour atteindre l'un desdits caoutchoucs rabattus (4G).

2. Bandage pneumatique selon la revendication 1, dans lequel ladite bande en caoutchouc conducteur a une épaisseur de 0,5 à 2,0 mm.

3. Bandage pneumatique selon la revendication 1 ou 2, dans lequel ladite bande en caoutchouc conducteur est disposée de façon à être exposée sur la surface extérieure de la portion formant paroi latérale.

4. Bandage pneumatique selon la revendication 1 ou 2, dans lequel ladite bande en caoutchouc conducteur est disposée de manière à passer entre la carcasse et le caoutchouc de paroi latérale.

5. Bandage pneumatique selon l'une quelconque des revendications 1 à 4, dans lequel lesdits caoutchoucs rabattus sont formés d'un matériau en caoutchouc électriquement conducteur, et une portion d'extrémité radialement intérieure de ladite bande en caoutchouc conducteur se termine en contact avec le caoutchouc rabattu.

6. Bandage pneumatique selon l'une quelconque des revendications 1 à 4, dans lequel lesdits caoutchoucs rabattus sont formés d'un matériau en caoutchouc isolant, et une portion d'extrémité radialement intérieure de ladite bande en caoutchouc conducteur se termine de manière à être exposée dans une région de contact de jante dans laquelle la surface extérieure de la portion formant talon vient en contact avec une jante.

7. Bandage pneumatique selon l'une quelconque des revendications 1 à 4, dans lequel lesdits caoutchoucs rabattus sont formés d'un matériau en caoutchouc électriquement isolant, et une portion d'extrémité radialement intérieure de ladite bande en caoutchouc conducteur se termine de manière à être exposée au pied de la portion formant talon.

8. Bandage pneumatique selon la revendication 6 ou 7, dans lequel des éléments du pneumatique en caoutchouc autres que lesdits caoutchoucs latéraux et ladite bande en caoutchouc conducteur sont formés d'un matériau en caoutchouc isolant.

9. Bandage pneumatique selon l'une quelconque des revendications 1 à 8, dans lequel la portion d'extrémité radialement extérieure de ladite bande en caoutchouc conducteur est prise en sandwich entre ledit caoutchouc de bande de roulement et ledit caoutchouc de paroi latérale.

10. Bandage pneumatique selon l'une quelconque des revendications 1 à 9, dans lequel ladite bande en caoutchouc conducteur est disposée de telle manière que l'une de ses bordures est en contact avec ladite carcasse et l'autre bordure est exposée sur la surface extérieure de ladite portion formant paroi latérale.
